# EUROPEAN PATENT APPLICATION

(11) **EP 2 407 522 A2**
(43) Date of publication of application: **18.01.2012**
(21) Application number: 11173537.9
(22) Date of filing: 12.07.2011
(51) Int. Cl.: C09J 7/02

(54) **Double-sided pressure-sensitive adhesive tape for fixing decorative sheet for speaker**

(30) Priority: 13.07.2010 JP 2010158443
(71) Applicant: NITTO DENKO CORPORATION, Osaka (JP)
(72) Inventor: Kobayashi, Mutsumi, Ibaraki-shi, Osaka (JP); Nishiyama, Naoyuki, Ibaraki-shi, Osaka (JP); Takahashi, Akiko, Ibaraki-shi, Osaka (JP)
(74) Representative: Grünecker, Kinkeldey, Stockmair & Schwanhäusser

(57) **Abstract**

A double-sided pressure-sensitive adhesive tape for fixing a decorative sheet for speaker, which is extremely small in the generation of VOC, is provided. The present invention relates to a double-sided pressure-sensitive adhesive tape for fixing a decorative sheet for speaker of the invention, comprising a substrate, a pressure-sensitive adhesive layer A disposed on one side of the substrate and a pressure-sensitive adhesive layer B disposed on the other side of the substrate, wherein a total volatile organic compound amount (TVOC amount) is 300 ug/g or less, a diffusion amount of formaldehyde is 3 µg/m³ or less, and a diffusion amount of toluene is 10 µg/g or less. A base polymer of the layer A is preferably formed by solution polymerization using a solvent selected from a solvent composed of only ethyl acetate and a mixed solvent having a proportion of ethyl acetate of 90 % by weight or more.

## Description

### BACKGROUND OF THE INVENTION

### Technical Field

The present invention relates to a double-sided pressure-sensitive adhesive tape for fixing a decorative sheet for speaker, which is small in the generation of VOC and which is used in attaching a decorative sheet having a given opening portion to a speaker portion of a television set, an audio system or the like.

### Background Art

In various industrial fields such as home electric appliances, automobiles and OA equipment, a double-sided pressure-sensitive adhesive tape (herein, it is intended to include also a double-sided pressure-sensitive adhesive sheet) is utilized as joining means with good operability and high reliability of adhesion. For example, in the front of a speaker of a television set, an audio system and the like, a decorative sheet having a given opening portion is attached together with gauze or the like by using a double-sided pressure-sensitive adhesive tape so as not to impair the acoustic performance such as sound volume and audio quality (see, for example, Patent Documents 1 and 2).

Patent Document 1: JP-A-7-305038
Patent Document 2: JP-A-9-157612

### SUMMARY OF THE INVENTION

In recent years, in response to environmental hygiene or sick house syndrome, it is necessary to prevent indoor air pollution, and double-sided pressure-sensitive adhesive tapes with reduced volatile organic compounds (VOC) have been strongly demanded.

An object of the invention is to provide a double-sided pressure-sensitive adhesive tape for fixing a decorative sheet for speaker, which is extremely small in the generation of VOC.

In order to achieve the foregoing object, the present inventors made extensive and intensive investigations. As a result, it has been found that in a double-sided pressure-sensitive adhesive tape comprising a substrate, pressure-sensitive adhesive layers disposed on both sides of the substrate, in which a surface of at least one of the pressure-sensitive adhesive layers is protected by a separator, by regulating each of a total volatile organic compound amount (TVOC amount), a diffusion amount of formaldehyde and a diffusion amount of toluene to a prescribed value or less, a double-sided pressure-sensitive adhesive tape for fixing a decorative sheet for speaker, which is small in the generation of VOC is obtained, leading to accomplishment of the invention.

The present invention provides the following double-sided pressure-sensitive adhesive tape for fixing a decorative sheet for speaker.
(1) A double-sided pressure-sensitive adhesive tape for fixing a decorative sheet for speaker, comprising a substrate, a pressure-sensitive adhesive layer A disposed on one side of the substrate and a pressure-sensitive adhesive layer B disposed on the other side of the substrate,
wherein a total volatile organic compound amount (TVOC amount) is 300 µg/g or less, a diffusion amount of formaldehyde is 3 µg/m³ or less, and a diffusion amount of toluene is 10 µg/g or less.

(2) The double-sided pressure-sensitive adhesive tape for fixing a decorative sheet for speaker according to (1), wherein a base polymer of the layer A is formed by solution polymerization using a solvent selected from a solvent composed of only ethyl acetate and a mixed solvent having a proportion of ethyl acetate of 90 % by weight or more.
(3) The double-sided pressure-sensitive adhesive tape for fixing a decorative sheet for speaker according to (1), wherein the layer A is formed from a water dispersion type pressure-sensitive adhesive composition.

(4) The double-sided pressure-sensitive adhesive tape for fixing a decorative sheet for speaker according to any one of (1) to (3), wherein in each of the layer A and the layer B, a content of a base polymer is 25 % by weight or more based on the total weight of the pressure-sensitive adhesive layer.

(5) The double-sided pressure-sensitive adhesive tape for fixing a decorative sheet for speaker according to any one of (1) to (4), wherein a base polymer of the pressure-sensitive adhesive layer is an acrylic polymer.

Since the double-sided pressure-sensitive adhesive tape for fixing a decorative sheet for speaker of the invention has the foregoing constitution, it is extremely small in the generation of VOC, and in particular, it can be extremely suitably used for an application of attaching a decorative sheet for speaker to a speaker portion of a housing.

### DETAILED DESCRIPTION OF THE INVENTION

The double-sided pressure-sensitive adhesive tape for fixing a decorative sheet for speaker of the invention (hereinafter sometimes referred to simply as a "double-sided pressure-sensitive adhesive tape of the invention") is a double-sided pressure-sensitive adhesive tape comprising a substrate, a pressure-sensitive adhesive layer A disposed on one side of the substrate and a pressure-sensitive adhesive layer B disposed on the other side of the substrate. Incidentally, in the followings, the pressure-sensitive adhesive layer disposed on one side of the substrate is sometimes referred to as the "layer A", and the pressure-sensitive adhesive layer disposed on the other side is sometimes referred to as the "layer B". Though there are no particular limitations, in using the double-sided pressure-sensitive adhesive tape for fixing a decorative sheet for speaker of the invention, it is preferable to use the layer A as the pressure-sensitive adhesive layer on the side (decorative sheet side) to be attached to a decorative sheet for speaker (decorative sheet) and to use the layer B as the pressure-sensitive adhesive layer on the side (housing side) to be attached to a housing. Also, the foregoing "tape" includes not only a tape-shaped material but a sheet-shaped material. That is, the "double-sided pressure-sensitive adhesive tape" also includes a "double-sided pressure-sensitive adhesive sheet". The double-sided pressure-sensitive adhesive tape of the invention preferably has a separator at least on a surface of the layer A. Meanwhile, a separator may or may not be disposed on a surface of the layer B.

A total volatile organic compound amount (TVOC amount) of the double-sided pressure-sensitive adhesive tape of the invention is 300 µg/g or less, preferably 200 µg/g or less, and more preferably 150 µg/g or less. If the total volatile organic compound amount (TVOC amount) of the double-sided pressure-sensitive adhesive tape of the invention exceeds 300 µg/g, it is not preferable from the environmental standpoint or the standpoint of safety against a human body. Incidentally, though it is preferable that the total volatile organic compound amount (TVOC amount) is smaller, for example, it can be 5 µg/g or more, and can be 10 µg/g or more.

As the total volatile organic compound amount, a value measured according to the following [Measurement method of total volatile organic compound amount (TVOC amount)] is adopted.

### [Measurement method of total volatile organic compound amount (TVOC amount)]

The double-sided pressure-sensitive adhesive tape is cut off into a prescribed size (1 cm × 5 cm, area: 5cm²), an aluminum foil is then attached onto one surface thereof, with the other surface being made in an opened state, thereby preparing a sample attached to the aluminum foil. Incidentally, the surface to be made in an opened state may be any side of the double-sided pressure-sensitive adhesive tape and can be arbitrarily chosen.

This sample attached to the aluminum foil is added in a vial container (volume: 20 mL), which is then hermetically plugged. Thereafter, the vial container having the sample added therein is heated at 80 °C for 30 minutes by a head space auto sampler, and 1.0 mL of the gas in a heated state is injected into a gas chromatographic measuring apparatus (GC measuring apparatus) and measured.

The amount of total volatile organic compounds (TVOC) is converted into a toluene standard on the basis of a separately prepared calibration curve. More specifically, the amount of the total volatile organic compound amount (TVOC amount) per gram of the sample as converted into a toluene standard is calculated on the basis of the following calibration curve from peak areas of all components of the sample obtained by the GC measurement.

### (Preparation of calibration curve)

Toluene as a standard sample is diluted with acetone to obtain a mixed standard solution. 1.0 µL of this mixed standard solution is added in a vial container, heated at 150 °C for 30 minutes and then subjected to GC measurement in the same manner as in the sample. Then, a calibration curve is prepared from adjusted concentrations and peak areas of the standard material.

Incidentally, the weight of the sample is a weight of the whole of the double-sided pressure-sensitive adhesive tape comprising a substrate and a pressure-sensitive adhesive layer supported by the substrate but does not include a separator.

A measurement condition of the gas chromatography is as follows.

### (Measurement condition of gas chromatography)

- Column: DB-FFAP, 1.0 µm (0.535 mmφ × 30 m)
- Carrier gas: He, 5.0 mL/min
- Column head pressure: 23 kPa (at 40°C)
- Injection inlet: Split (split ratio: 12:1, temperature: 250 °C)
- Column temperature: 40 °C (0 min) - <+10 °C/min> - 250 °C (9 min) [It is meant that the temperature is increased from 40 °C to 250 °C at a temperature elevation rate of 10 °C/min and then kept at 250 °C for 9 minutes.]
- Detector: FID (temperature: 250 °C)

A diffusion amount of formaldehyde of the double-sided pressure-sensitive adhesive tape of the invention is 3 µg/m³ or less, preferably 2 µg/m³ or less, and more preferably 1µg/m³ or less. If the diffusion amount of formaldehyde of the double-sided pressure-sensitive adhesive tape of the invention exceeds 3 µg/m³, it is not preferable because the amount of VOC generated from the double-sided pressure-sensitive adhesive tape is large.

As the diffusion amount of formaldehyde, a value measured by a method in conformity with JIS A 1901 (2003) is adopted.
The double-sided pressure-sensitive adhesive tape is cut off into a prescribed size (area: 0.043m²), an aluminum foil is then attached onto one surface thereof, with the other surface being made in an opened state, thereby preparing a sample attached to the aluminum foil. Incidentally, the surface to be made in an opened state may be any side of the double-sided pressure-sensitive adhesive tape and can be arbitrarily chosen.
This sample attached to the aluminum foil is placed in a central part within a small-sized chamber under a condition of fixed temperature, relative humidity and amount of ventilation, and air is circulated thereinto.

### (Condition of small-sized chamber)

Temperature: 28.0 ± 0.5 °C
Relative humidity: (50 ± 5) %
Number of ventilation: 0.5 times ± 10 %/hr
After a lapse of one day (24 hours) from start of the test, a concentration in the small-sized chamber is determined from air collected at an outlet of the small-sized chamber (a concentration of formaldehyde measured at the outlet of the small-sized chamber, which is a value obtained by dividing a total amount of formaldehyde collected in an exhaust port of the small-sized chamber by a collecting amount of air at the time of collecting air), from which is then calculated and quantified a concentration of formaldehyde (µg/m³) within the small-sized chamber after a lapse of one day (24 hours) from start of the test.
The concentration of formaldehyde within the small-sized chamber after a lapse of one day (24 hours) after start of this test is defined as a diffusion amount of formaldehyde.
A specific condition is as follows.

### Sampling condition

- Sampling tube: "GL-PAK mini AERO DNPH cartridge", manufactured by GL Sciences, Inc.
- Flow rate: 167 mL/min
- Collecting amount: 10 L

### Measurement instruments, etc.

- Small-sized chamber: "20L Chamber", manufactured by ADTEC Corporation
- Clean air supplying apparatus: "ADclean", manufactured by Shinryo Eco Business Co., Ltd.
- Sealing material and sealing box: None
- Temperature and humidity control apparatus: "ADPAC-SYSTEM III temperature and humidity unit", manufactured by ADTEC Corporation
- Air sampling apparatus: "SP208-1000DUAL sampling pump", manufactured by GL Sciences, Inc.

### Analysis condition

- High-performance liquid chromatograph: TM996PAD, manufactured by Waters Corporation
- Detector: UV Detector
- Column: "Puresil C 18 (4.6 × 150 mm)", manufactured by Waters corporation
- Mobile phase: Acetonitrile aqueous solution (acetonitrile/water = 50/50)
- Injection amount: 20 µL
- Detection wavelength: 360 nm

A diffusion amount of toluene of the double-sided pressure-sensitive adhesive tape of the invention is 10 µg/g or less, preferably 5 µg/g or less, and more preferably 3 µg/g or less. If the diffusion amount of toluene of the double-sided pressure-sensitive adhesive tape of the invention exceeds 10 µg/g, it is not preferable because the amount of VOC generated from the double-sided pressure-sensitive adhesive tape is large.

As the diffusion amount of toluene, a value measured according to the following [Measurement method of diffusion amount of toluene] is adopted.

### [Measurement method of diffusion amount of toluene]

The double-sided pressure-sensitive adhesive tape is cut off into a prescribed size (1cm×5 cm, area: 5cm²), an aluminum foil is then attached onto one surface thereof, with the other surface being made in an opened state, thereby preparing a sample attached to the aluminum foil. Incidentally, the surface to be made in an opened state may be any side of the double-sided pressure-sensitive adhesive tape and can be arbitrarily chosen.

This sample attached to the aluminum foil is added in a vial container (volume: 20 mL), which is then hermetically plugged. Thereafter, the vial container having the sample added therein is heated at 80 °C for 30 minutes by a head space auto sampler, and 1.0 mL of the gas in a heated state is injected into a gas chromatographic measuring apparatus (GC measuring apparatus), and an amount of toluene is measured. More specifically, the amount of toluene is determined on the basis of a calibration curve prepared from a peak area assigned to toluene of the sample, which is obtained by the GC measurement, according to the following method, and a content (µg/g) of toluene per gram of the sample (double-sided pressure-sensitive adhesive tape) is calculated. This content of toluene is defined as a diffusion amount of toluene.

### (Preparation of calibration curve)

Toluene as a standard sample is diluted with acetone to obtain a mixed standard solution. 1.0 µL of this mixed standard solution is added in a vial container, heated at 150 °C for 30 minutes and then subjected to GC measurement in the same manner as in the sample. Then, a calibration curve is prepared from adjusted concentrations and peak areas of the standard material.

A measurement condition of the gas chromatography is as follows.

### (Measurement condition of gas chromatography)

- Column: DB-FFAP, 1.0 µm (0.535 mmφ × 30 m)
- Carrier gas: He, 5.0 mL/min
- Column head pressure: 23 kPa (at 40 °C)
- Injection inlet: Split (split ratio: 12:1, temperature: 250 °C)
- Column temperature: 40 °C (0 min) - <+10 °C/min> - 250 °C (9 min) [It is meant that the temperature is increased from 40 °C to 250 °C at a temperature elevation rate of 10 °C/min and then kept at 250 °C for 9 minutes.]
- Detector: FID (temperature: 250 °C)

### (Substrate)

The substrate constituting the double-sided pressure-sensitive adhesive tape of the invention is not particularly limited. For example, proper thin sheet materials such as paper based substrates such as papers; fiber based substrates such as woven fabrics, nonwoven fabrics and nets; metal based substrates such as metal foils and metal plates; plastic based substrates such as plastic films or sheets; rubber based substrates such as rubber sheets; foamed materials such as foamed sheets; and laminates thereof (in particular, laminates of a plastic based substrate and other substrate, laminates of plastic films (sheets), etc.) can be used. Above all, fiber based substrates are preferable because there are flexible and excellent in follow-up properties to an adherend, and nonwoven fabric substrates are especially preferable. Such a substrate can be used solely or in combination of two or more kinds thereof. Incidentally, the "substrate" as referred to herein means a portion to be attached to an adherend together with the pressure-sensitive adhesive layer when the double-sided pressure-sensitive adhesive tape is used (applied to the adherend). A separator (release liner) which is released at the time of use (at the time of attachment) of the double-sided pressure-sensitive adhesive tape is not included in the "substrate".

Examples of a raw material in the plastic films or sheets include olefin based resins prepared from an α-olefin as a monomer component, such as polyethylene (PE), polypropylene (PP), an ethylene-propylene copolymer and an ethylene-vinyl acetate copolymer (EVA); polyester based resins such as polyethylene terephthalate (PET), polyethylene naphthalate (PEN) and polybutylene terephthalate (PBT); polyvinyl chloride (PVC); vinyl acetate based resins; polyphenylene sulfide (PPS); amide based resins such as polyamide (nylon) and wholly aromatic polyamide (aramid); polyimide based resins; and polyetheretherketone (PEEK).

Also, as the nonwoven fabric constituting the substrate of the double-sided pressure-sensitive adhesive tape of the invention, conventional or known nonwoven fabrics which are used as a substrate of double-sided pressure-sensitive adhesive tapes (for example, Manila hemp; pulps; chemical fibers such as rayon, acetate fibers, polyester fibers, polyvinyl alcohol fibers, polyamide fibers and polyolefin fibers; and mixtures thereof) can be used.

The air permeability of the nonwoven fabric is not particularly limited, but is preferably 0.3 sec or less, more preferably 0.2 sec or less. If the air permeability of the nonwoven fabric exceeds 0.3 sec, the impregnating ability of a pressure-sensitive adhesive into the nonwoven fabric may be decreased when coating the pressure-sensitive adhesive on the nonwoven fabric and the strength of the double-sided adhesive tape may become insufficient. The air permeability of the nonwoven fabric can be measured in accordance with the JIS-P-8117 (2009) method.

Though a basis weight of the nonwoven fabric is not particularly limited, it is preferably from 10 to 30 g/m ² and more preferably from 10 to 25 g/m². When the basis weight of the nonwoven fabric is less than 10 g/m², there may be the case where the substrate is insufficient in strength or inferior in processability. On the other hand, when the basis weight of the nonwoven fabric exceeds 30 g/m², there may be the case where it is difficult to make the thickness of the pressure-sensitive adhesive layer thick, so that a pressure-sensitive adhesive layer having a desired thickness cannot be obtained, and pressure-sensitive adhesive characteristics are lowered.

The thickness of the substrate can be properly chosen depending upon the strength or flexibility required for the double-sided pressure-sensitive adhesive tape, the use purpose of the double-sided pressure-sensitive adhesive tape and the like, and for example, it is in general about 1,000 µm or less (for example, from about 1 to 1,000 µm), preferably from about 1 to 500 µm, and more preferably from about 3 to 300 µm. But, it should not be construed that the invention is limited thereto. Incidentally, the substrate may have a single-layered form or may have a laminated form. Also, in order to enhance adhesion to the pressure-sensitive adhesive layer or the like, the surface of the substrate may be subjected to a conventional surface treatment such as an oxidation treatment by a chemical or physical treatment, for example, a corona treatment, a chromic acid treatment, ozone exposure, flame exposure, high-voltage electric shock exposure, an ionized radiation treatment, etc., or may be subjected to a coating treatment with an undercoating agent, a releasing agent, etc.

### (Pressure-sensitive adhesive layer and pressure-sensitive adhesive)

In the double-sided pressure-sensitive adhesive tape of the invention, the pressure-sensitive adhesive layer (each of layer A and layer B) is disposed on each side of the substrate. At the time of using the double-sided pressure-sensitive adhesive tap for fixing a decorative sheet for speaker of the invention, the surface of the layer A is suitably used as a pressure-sensitive adhesive surface on the side to be attached to a decorative sheet for speaker, whereas the surface of the layer B is suitably used as a pressure-sensitive adhesive surface on the side to be attached to a housing. Incidentally, in the double-sided pressure-sensitive adhesive tape of the invention, it is preferable that the surface of the layer A is at least protected by a separator.

In the double-sided pressure-sensitive adhesive tape of the invention, though the pressure-sensitive adhesive for forming each of the layer A and the layer B is not particularly limited, for example, known or conventional pressure-sensitive adhesives which are in general used for pressure-sensitive adhesive tapes or pressure-sensitive adhesive sheets can be used. More specifically, there are exemplified known or conventional pressure-sensitive adhesives such as acrylic pressure-sensitive adhesives, rubber based pressure-sensitive adhesives, vinyl alkyl ether based pressure-sensitive adhesives, silicone based pressure-sensitive adhesives, polyester based pressure-sensitive adhesives, polyamide based pressure-sensitive adhesives, urethane based pressure-sensitive adhesives, fluorine based pressure-sensitive adhesives and epoxy based pressure-sensitive adhesives. Such a pressure-sensitive adhesive can be used solely or in combination of two or more kinds thereof. Incidentally, the pressure-sensitive adhesive for forming the layer A and the pressure-sensitive adhesive for forming the layer B may be the same as or different from each other.

Also, in the double-sided pressure-sensitive adhesive tape of the invention, in view of pressure-sensitive adhesive characteristics, acrylic pressure-sensitive adhesives containing an acrylic polymer as a base polymer are preferable, that is, it is preferable that each of the layer A and the layer B is an acrylic pressure-sensitive adhesive layer composed of an acrylic polymer as a base polymer.

From the standpoint of more realizing pressure-sensitive adhesive characteristics, a content of the base polymer (in particular, an acrylic polymer) in the layer A is preferably 25 % by weight or more (for example, from 25 to 95 % by weight), and more preferably 40 % by weight or more (for example, from 40 to 90 % by weight) based on the total weight of the pressure-sensitive adhesive layer.

Also, from the standpoint of more realizing pressure-sensitive adhesive characteristics, a content of the base polymer (in particular, an acrylic polymer) in the layer B is preferably 25 % by weight or more (for example, from 25 to 95 % by weight), more preferably 55 % by weight or more (for example, from 55 to 95 % by weight). and still more preferably 65 % by weight or more (for example, from 65 to 85 % by weight) based on the total weight of the pressure-sensitive adhesive layer.

As for the main monomer component for forming the acrylic polymer, a (meth)acrylic alkyl ester having a linear or branched alkyl group (hereinafter, sometimes simply referred to as a "(meth)acrylic acid alkyl ester") may be suitably used. Examples of the (meth)acrylic acid alkyl ester include a (meth)acrylic alkyl ester having an alkyl group having 1 to 20 carbon atoms such as methyl(meth)acrylate, ethyl(meth)acrylate, propyl(meth)acrylate, isopropyl(meth)acrylate, butyl(meth)acrylate, isobutyl(meth)acrylate, s-butyl(meth)acrylate, tert-butyl(meth)acrylate, pentyl(meth)acrylate, isopentyl(meth)acrylate, hexyl(meth)acrylate, heptyl(meth)acrylate, octyl(meth)acrylate, 2-ethylhexyl(meth)acrylate, isooctyl(meth)acrylate, nonyl(meth)acrylate, isononyl(meth)acrylate, decyl(meth)acrylate, isodecyl(meth)acrylate, undecyl(meth)acrylate, dodecyl(meth)acrylate, tridecyl(meth)acrylate, tetradecyl(meth)acrylate, pentadecyl(meth)acrylate, hexadecyl(meth)acrylate, heptadecyl(meth)acrylate, octadecyl(meth)acrylate, nonadecyl(meth)acrylate and eicosyl(meth)acrylate. Among these, a (meth)acrylic acid alkyl ester having an alkyl group having 2 to 14 carbon atoms is preferred, a (meth)acrylic acid alkyl ester having an alkyl group having 2 to 10 carbon atoms is more preferred, and butyl acrylate is still more preferred. The term "(meth)acryl" as used herein indicates "acryl" and/or "methacryl", and the same applies to others.

One of these (meth)acrylic acid esters may be used alone, or two or more thereof may be used in combination. Incidentally, since the (meth)acrylic acid alkyl ester is used as the predominant monomer component (monomer main component) of the acrylic polymer, the proportion of the (meth)acrylic alkyl ester is, for example, preferably 60 % by weight or more (for example, from 60 to 99 % by weight), more preferably 80 % by weight or more, based on the total amount of monomer components for forming the acrylic polymer.

In the acrylic polymer, various copolymerizable monomers such as polar group-containing monomer and polyfunctional monomer may be used as another monomer component. By using a copolymerizable monomer as another monomer component, for example, the adhesive force to an adherend may be enhanced or the cohesive force of the pressure-sensitive adhesive may be raised. One of copolymerizable monomers may be used alone, or two or more thereof may be used in combination.

Examples of the polar group-containing monomer include a carboxyl group-containing monomer such as (meth)acrylic acid, itaconic acid, maleic acid, fumaric acid, crotonic acid and isocrotonic acid, or an anhydride thereof (e.g., maleic anhydride); a hydroxyl group-containing monomer such as hydroxyalkyl(meth)acrylate (e.g., hydroxyethyl(meth)acrylate, hydroxypropyl(meth)acrylate, hydroxybutyl(meth)acrylate), vinyl alcohol and allyl alcohol; an amide group-containing monomer such as acrylamide, methacrylamide, N,N-dimethyl(meth)acrylamide, N-methylol(meth)acrylamide, N-methoxymethyl(meth)acrylamide and N-butoxymethyl(meth)acrylamide; an amino group-containing monomer such as aminoethyl(meth)acrylate, dimethylaminoethyl(meth)acrylate and tert-butylaminoethyl(meth)acrylate; a glycidyl group-containing monomer such as glycidyl(meth)acrylate and methylglycidyl(meth)acrylate; a cyano group-containing monomer such as acrylonitrile and methacrylonitrile; a heterocyclic ring-containing vinyl-based monomer such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole and N-vinyloxazole; an alkoxyalkyl(meth)acrylate monomer such as methoxyethyl(meth)acrylate and ethoxyethyl(meth)acrylate; a sulfonic acid group-containing monomer such as sodium vinylsulfonate; a phosphoric acid group-containing monomer such as 2-hydroxyethylacryloyl phosphate; an imido group-containing monomer such as cyclohexylmaleimide and isopropylmaleimide; and an isocyanate group-containing monomer such as 2-methacryloyloxyethyl isocyanate. Among these polar group-containing monomers, a carboxyl group-containing monomer or an anhydride thereof and a hydroxyl group-containing monomer are preferred, and an acrylic acid, hydroxyethyl acrylate and hydroxybutyl acrylate are more preferred.

The amount of the polar group-containing monomer used is 30 % by weight or less (for example, from 1 to 30 % by weight), preferably from 2.5 to 20 % by weight, based on the total amount of monomer components for forming the acrylic polymer. If the amount of the polar group-containing monomer used exceeds 30 % by weight, for example, the cohesive force of the acrylic pressure-sensitive adhesive may become excessively high and the pressure-sensitive adhesiveness of the pressure-sensitive adhesive layer may decrease, whereas if the amount of the polar group-containing monomer used is too small (for example, less than 1 % by weight), the effect of the copolymer of these monomers may not be obtained. Above all, it is preferred to use a carboxyl group-containing monomer or an anhydride thereof in an amount of 1 to 10 % by weight.

Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl(meth)acrylate, vinyl(meth)acrylate, divinylbenzene, epoxy acrylate, polyester acrylate and urethane acrylate.

The amount of the polyfunctional monomer used is 2 % by weight or less (for example, from 0 to 2 % by weight), preferably from 0 to 1 % by weight, based on the total amount of monomer components for forming the acrylic monomer. If the amount of the polyfunctional monomer used exceeds 2 % by weight based on the total amount of monomer components for forming the acrylic monomer, for example, the cohesive force of the pressure-sensitive adhesive may become excessively high and the pressure-sensitive adhesiveness may decrease.

Examples of the copolymerizable monomer other than the polar group-containing monomer and polyfunctional monomer include a (meth)acrylic acid ester except for the above-described (meth)acrylic acid alkyl ester, such as alicyclic hydrocarbon group-containing (meth)acrylic acid ester (e.g., cyclopentyl(meth)acrylate, cyclohexyl(meth)acrylate, isobornyl(meth)acrylate) and aromatic hydrocarbon group-containing (meth)acrylic acid ester (e.g., phenyl(meth)acrylate); vinyl esters such as vinyl acetate and vinyl propionate; aromatic vinyl compounds such as styrene and vinyl toluene; olefins or dienes such as ethylene, butadiene, isoprene and isobutylene; vinyl ethers such as vinyl alkyl ether; and vinyl chloride.

As a polymerization method of the acrylic polymer, though known or conventional polymerization methods can be adopted, from the standpoint of minimizing the generation of VOC, emulsion polymerization. solution polymerization, active energy ray polymerization (photopolymerization) or the like is preferable.

At the emulsion polymerization, various polymerization methods such as generally used method of adding all at once (all-at-once polymerization method) and monomer dropping method (for example, a continuous dropping method, a divisional dropping method, etc.) can be adopted. A polymerization temperature can be properly chosen depending upon the kind of a monomer, the kind of a polymerization initiator and the like, and for example, it can be chosen from the range of from 20 to 100 °C.

The polymerization initiator which is used at the time of emulsion polymerization can be chosen among known or conventional polymerization initiators depending upon the kind of the polymerization method. Examples of the polymerization initiator include azo based polymerization initiators such as 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl)propane) dihydrochloride, 2,2'-azobis(N,N'-dimethyleneisobutylamidine), 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate) and 2,2'-azobis[N-(2-carboxyethyl)-2-methylpropioneamidine; persulfates such as potassium persulfate and ammonium persulfate; peroxide based polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane,1,1-bis(t-butylperoxy)cyclododecane and hydrogen peroxide; substituted ethane based polymerization initiators such as phenyl-substituted ethane; aromatic carbonyl compounds; and redox based initiators composed of a combination of a peroxide and a reducing agents (for example, redox based initiators such as combinations of a peroxide and ascorbic acid (e.g., a combination of an aqueous hydrogen peroxide solution and ascorbic acid, etc.), combinations of a peroxide and an iron(II) salt (e.g., a combination of an aqueous hydrogen peroxide solution and an iron(II) salt, etc.), combinations of a persulfate and sodium hydrogen sulfite, etc.). The polymerization initiator can be used solely or in combination of two or more kinds thereof.

A used amount of the polymerization initiator which is used at the time of emulsion polymerization may be a usual used amount, and for example, it can be chosen from the range of from about 0.005 to 1 part by weight based on 100 parts by weight of the total monomer components for forming the acrylic polymer.

At the emulsification polymerization, an emulsifier can be used. For example, though the emulsifier may be in any form, anionic emulsifiers or nonionic emulsifiers can be suitably used. Examples of the anionic emulsifier include alkyl sulfate type anionic emulsifiers such as sodium lauryl sulfate, ammonium lauryl sulfate and potassium lauryl sulfate; polyoxyethylene alkyl ether sulfate type anionic emulsifiers such as sodium polyoxyethylene lauryl ether sulfate; polyoxyethylene alkylphenyl ether sulfate type anionic emulsifiers such as ammonium polyoxyethylene laurylphenyl ether sulfate and sodium polyoxyethylene laurylphenyl ether sulfate; sulfonate type anionic emulsifiers such as sodium dodecylbenzenesulfonate; and sulfosuccinic acid type anionic emulsifiers such as disodium laurylsulfosuccinate and disodium lauryl polyoxyethylenesulfosuccinate. Also, examples of the nonionic emulsifier include polyoxyethylene alkyl ether type nonionic emulsifiers such as polyoxyethylene lauryl ether; polyoxyethylene alkylphenyl ether type nonionic emulsifiers such as polyoxyethylene laurylphenyl ether; and nonionic emulsifiers such as polyoxyethylene fatty acid esters and a polyoxyethylene-polyoxypropylene block polymer. The emulsifier can be used solely or in combination of two or more kinds thereof.

A used amount of the emulsifier is not particularly limited so far as it is a used amount in which the acrylic polymer can be prepared in a form of an emulsion. For example, the used amount of the emulsifier can be chosen from the range of from about 0.2 to 10 % by weight (preferably from 0.5 to 5 % by weight) based on the total amount of the monomer components for forming the acrylic polymer.

Also, at the emulsion polymerization, a chain transfer agent can be used for the purpose of adjusting the molecular weight. As the chain transfer agent, known or conventional chain transfer agents can be used, and examples thereof include mercaptans such as dodecanethiol (lauryl mercaptan), glycidyl mercaptan, 2-mercaptoethanol, mercaptoacetic acid, 2-ethylhexyl thioglycolate and 2,3-dimercapto-1-propanol; and in addition to the above, α-methylstyrene dimer. The chain transfer agent can be used solely or in combination of two or more kinds thereof. A used amount of the chain transfer agent may be a usual used amount, and for example, it can be chosen from the range of from about 0.001 to 0.5 parts by weight based on 100 parts by weight of the total amount of the monomer components for forming the acrylic polymer.

At the solution polymerization, various generally used solvents can be used. Examples of such a solvent include organic solvents such as esters, for example, ethyl acetate, n-butyl acetate, etc.; aromatic hydrocarbons, for example, toluene, benzene, etc.; aliphatic hydrocarbons, for example, n-hexane, n-heptane, etc.; alicyclic hydrocarbons, for example, cyclohexane, methyl cyclohexane, etc.; and ketones, for example, methyl ethyl ketone, methyl isobutyl ketone, etc. Incidentally, the solvent can be used solely or in combination of two or more kinds thereof.

In the double-sided pressure-sensitive adhesive tape of the invention, from the standpoint of minimizing the generation of VOC, as a solvent which is used for the solution polymerization, for example, ethyl acetate, methyl ethyl ketone, acetone, hexane or a mixed solvent thereof or the like is useful, and it is preferable that toluene is not used.

In particular, in the double-sided pressure-sensitive adhesive tape of the invention, a solvent composed of only ethyl acetate or a mixed solvent containing ethyl acetate is preferable. Also, in the case of using a mixed solvent containing ethyl acetate as the solvent which is used for the solution polymerization, it is preferable to regulate a content of ethyl acetate to 90 % by weight or more (preferably 95 % by weight or more) based on the total amount of the mixed solvent. This is because when the content of ethyl acetate is less than 90 % by weight, there is a concern that the amount of TVOC becomes large.

Examples of the polymerization initiator which is used at the polymerization of the acrylic polymer by means of solution polymerization include azo based initiators, peroxide based polymerization initiators (for example, dibenzoyl peroxide, tert-butyl permaleate, etc.) and redox based polymerization initiators. Above all, azo based initiators disclosed in JP-A-2002-69411 are especially preferable. Such an azo based initiator is preferable because a decomposition product of the initiator hardly remains as a portion which will cause the generation of a heat-generated gas (outgas) in the acrylic polymer. Examples of the azo based initiator include 2,2'-azobisisobutyronitrile, 2,2'-azobis-2-methylbutyronitrile, dimethyl 2,2'-azobis(2-methylpropionate) and 4,4'-azobis-4-cyanovaleric acid. Though a used amount of such a polymerization initiator is not particularly limited, for example, it is preferably from 0.01 to 5 parts by weight, and more preferably from 0.03 to 3 parts by weight based on 100 parts by weight of the total amount of the monomer components for forming the acrylic polymer.

At the preparation of the acrylic polymer by means of active energy ray polymerization, a photopolymerization initiator (photoinitiator) can be used. Incidentally, the photopolymerization initiator can be used solely or in combination of two or more kinds thereof.

The photopolymerization initiator is not particularly limited. For example, benzoin ether based photopolymerization initiators, acetophenone based photopolymerization initiators, α-ketol based photopolymerization initiators, aromatic sulfonyl chloride based photopolymerization initiators, photoactive oxime based photopolymerization initiators, benzoin based photopolymerization initiators, benzyl based photopolymerization initiators, benzophenone based photopolymerization initiators, ketal based photopolymerization initiators, thioxanthone based photopolymerization initiators and the like can be used.

Examples of the benzoin ether based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone based photopolymerization initiator include 2,2-diethoxyacetophenone, 2,2-dimethoxy-2-phenylacetophenone, 1-hydroxycyclohexyl phenyl ketone, 4-phenoxydichloroacetophenone and 4-(t-butyl)dichloroacetophenone. Examples of the α-ketol based photopolymerization initiator include 2-methyl-2-hydroxypropiophenone and 1-[4-(2-hydroxyethyl)phenyl]-2-methylpropan-1-one. Examples of the aromatic sulfonyl chloride based photopolymerization initiator include 2-naphthalenesulfonyl chloride. Examples of the photoactive oxime based photopolymerization initiator include 1-phenyl-1,1-propanedione-2-(o-ethoxycarbonyl)-oxime. Examples of the benzoin based photopolymerization initiator include benzoin. Examples of the benzyl based photopolymerization initiator include benzyl. Examples of the benzophenone based photopolymerization initiator include benzophenone, benzoyl benzoate, 3,3'-dimethyl-4-methoxybenzophenone, polyvinyl benzophenone and α-hydroxycyclohexyl phenyl ketone. Examples of the ketal based photopolymerization initiator include benzyl dimethyl ketal. Examples of the thioxanthone based photopolymerization initiator include thioxanthone, 2-chlorothioxanthone, 2-methylthioxanthone, 2,4-dimethylthioxanthone, isopropylthioxanthone, 2,4-diisopropylthioxanthone and dodecylthioxanthone.

Though a used amount of the photopolymerization initiator is not particularly limited, for example, it is preferably from 0.01 to 5 parts by weight, and more preferably from 0.03 to 3 parts by weight based on 100 parts by weight of the total amount of the monomer components for forming the acrylic polymer.

Examples of the active energy ray which is irradiated at the active energy ray polymerization (photopolymerization) include ionizing radiations such as an α-ray, a β-ray, a γ-ray, a neutron ray and an electron beam and an ultraviolet ray, with an ultraviolet ray being especially suitable. Therefore, among the active energy ray polymerizations, an ultraviolet polymerization method is especially preferable by irradiating the ultraviolet ray. Also, the active energy ray is not particularly limited with respect to irradiation energy, irradiation time, irradiation method and the like so far as it is able to cause a reaction of the monomer components upon activating the photopolymerization initiator.

In the double-sided pressure-sensitive adhesive tape of the invention, particles may be added in each of the pressure-sensitive adhesive layers (i.e., the layer A and the layer B). In particular, from the standpoint of stably obtaining a satisfactory matting effect or the standpoint of keeping satisfactory design properties over a long period of time, it is preferable that the layer A contains particles. For example, when the double-sided pressure-sensitive adhesive tape for fixing a decorative sheet for speaker of the invention contains particles in the layer A, it is possible to effectively suppress the generation of such a problem that after being mounted on a speaker, the design properties are gradually lowered at the time of use.

In the case where particles are contained in the layer A, the particles are not particularly limited, and they may be an inorganic particle, or may be an organic particle. Furthermore, the particles may be an inorganic-organic hybrid particle. Moreover, the particles may be any of a solid body or a hollow body (balloon).

The particles can be used solely or in combination of two or more kinds thereof. For example, in the case of using a combination of two or more kinds of particles, a combination of two or more kinds of only inorganic particles or organic particles may be used, or a combination of organic particles and inorganic particles may be used.

Examples of the inorganic particles include silica, alumina, silicone (silicone powder), calcium carbonate, clay, titanium oxide, talc, layered silicate, clay minerals, glass, glass bead, glass balloon, alumina balloon, ceramic balloon, titanium white, titania, zirconia, carbon (for example, carbon black, carbon nanotube, etc.), metal particles (for example, magnesium, aluminum, zirconium, silicon, calcium, titanium, vanadium, chromium, cobalt, nickel, copper, germanium, molybdenum, rhodium, silver, indium, tin, tungsten, iridium, platinum, iron, gold, etc.) and metal oxide particles (for example, iron oxide, indium oxide, stannic oxide, chromium oxide, nickel oxide, copper oxide, titanium oxide, zirconium oxide, aluminum oxide, zinc oxide, antimony oxide, calcium oxide, cadmium oxide, etc.). Also, a silica gel having a metal oxide (for example, the foregoing metal oxides, in particular titanium oxide, etc.) supported thereon may be used.

Examples of the organic particles include organic particles such as polyester bead, nylon bead, silicon bead, urethane bead, vinylidene chloride bead and acrylic balloon; and resin particles such as crosslinked acrylic particles, crosslinked styrene particles, melamine resin particles, benzoguanamine resin and nylon resin.

Though an average particle size of the particles is not particularly limited, in view of an effect for keeping a glossiness on the surface of the layer A, it is preferably from 1 to 70 µm, and more preferably from 1 to 20 µm. When the average particle size of the particles is less than 1 µm, there may be the case where the effect for keeping a glossiness is not obtained, whereas when it exceeds 70 µm, there may be the case where a pressure-sensitive adhesive force is largely lowered.

Though a content of the particles in the layer A is not particularly limited, from the standpoint of stably obtaining a satisfactory matting effect, the content of the particles in the layer A is preferably 0.1 parts by weight or more and 200 parts by weight or less based on 100 parts by weight of the base polymer.

In the double-sided pressure-sensitive adhesive tape of the invention, a crosslinking agent may be added in each of the pressure-sensitive adhesive layers (i.e., the layer A and the layer B). The crosslinking agent bears a role of, for example, controlling a gel fraction of the pressure-sensitive adhesive layer (proportion of solvent-insoluble components). Examples of the crosslinking agent include isocyanate based crosslinking agents, epoxy based crosslinking agents, melamine based crosslinking agents, peroxide based crosslinking agents, urea based crosslinking agents, metal alkoxide based crosslinking agents, metal chelate based crosslinking agents, metal salt based crosslinking agents, carbodiimide based crosslinking agents, oxazoline based crosslinking agents, aziridine based crosslinking agents and amine based crosslinking agents. Above all, isocyanate based crosslinking agents are preferable. Such a crosslinking agent can be used solely or in combination of two or more kinds thereof.

Examples of the isocyanate-based crosslinking agent include lower aliphatic polyisocyanates such as 1,2-ethylene diisocyanate, 1,4-butylene diisocyanate and 1,6-hexamethylene diisocyanate; alicyclic polyisocyanates such as cyclopentylene diisocyanate, cyclohexylene diisocyanate, isophorone diisocyanate, hydrogenated tolylene diisocyanate and hydrogenated xylene diisocyanate; and aromatic polyisocyanates such as 2,4-tolylene diisocyanate, 2,6-tolylene diisocyanate, 4,4'-diphenylmethane diisocyanate and xylylene diisocyanate. Other examples thereof include a trimethylolpropane/tolylene diisocyanate trimer adduct ("Coronate L", trade name, manufactured by Nippon Polyurethane Industry Co., Ltd.) and a trimethylolpropane/hexamethylene diisocyanate trimer adduct ("Coronate HL", trade name, manufactured by Nippon Polyurethane Industry Co., Ltd.).

Examples of the epoxy-based crosslinking agent include N,N,N',N'-tetraglycidyl-m-xylenediamine, diglycidylaniline, 1,3-bis(N,N-glycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris(2-hydroxyethyl)isocyanurate, resorcin diglycidyl ether, bisphenol-S-diglycidyl ether, and an epoxy-based resin having two or more epoxy groups within the molecule.

For example, in the case where the layer A is an acrylic pressure-sensitive adhesive layer, a used amount of the crosslinking agent (in particular, the isocyanate based crosslinking agent) is preferably from 1 to 10 parts by weight, and more preferably from 1 to 5.5 parts by weight based on 100 parts by weight of the acrylic polymer. Also, in the case where the layer B is an acrylic pressure-sensitive adhesive layer, a used amount of the crosslinking agent (in particular, the isocyanate based crosslinking agent) is preferably from 1 to 5 parts by weight, and more preferably from 1.5 to 3.5 parts by weight based on 100 parts by weight of the acrylic polymer.

In the double-sided pressure-sensitive adhesive tape of the invention, a tackifying resin may be added in each of the pressure-sensitive adhesive layers (i.e., the layer A and the layer B). When the tackifying resin is added, high adhesion and excellent peel-preventing properties can be ensured.

Though the tackifying resin is not particularly limited, examples thereof include rosin based tackifying resins, terpene based tackifying resins, hydrocarbon based tackifying resins, epoxy based tackifying resins, polyamide based tackifying resins, elastomer based tackifying resins, phenol based tackifying resins and ketone based tackifying resins. The tackifying resin can be used solely or in combination of two or more kinds thereof.

Specifically, examples of the rosin-based tackifying resin include an unmodified rosin (natural rosin) such as gum rosin, wood rosin and tall oil rosin, a modified rosin (e.g., hydrogenated rosin, disproportionated rosin, polymerized rosin, other chemically modified rosins), and various rosin derivatives. Examples of the rosin derivative include rosin esters such as a rosin ester compound obtained by esterifying an unmodified rosin with alcohols, and a modified rosin ester compound obtained by esterifying a modified rosin (e.g., hydrogenated rosin, disproportionated rosin, polymerized rosin) with alcohols; unsaturated fatty acid-modified rosins obtained by modifying an unmodified rosin or a modified rosin (e.g., hydrogenated rosin, disproportionated rosin, polymerized rosin) with an unsaturated fatty acid; unsaturated fatty acid-modified rosin esters obtained by modifying rosin esters with an unsaturated fatty acid; rosin alcohols obtained by reducing the carboxyl group in unmodified rosins, modified rosins (e.g., hydrogenated rosin, disproportionated rosin, polymerized rosin), unsaturated fatty acid-modified rosins or unsaturated fatty acid-modified rosin esters; and a metal salt of rosins (particularly, rosin esters) such as unmodified rosin, modified rosin and various rosin derivatives. Also, rosin phenol resins obtained by adding phenol to rosins (for example, unmodified rosins, modified rosins, various rosin derivatives, etc.) in the presence of an acid catalyst, followed by thermal polymerization can be used as the rosin derivative.

Examples of the terpene-based tackifying resin include a terpene-base resin such as α-pinene polymer, β-pinene polymer and diterpene polymer, and a modified terpene-based resin (e.g., terpene phenolic resin, styrene-modified terpene-based resin, aromatic-modified terpene-based resin, hydrogenated terpene-based resin) obtained by modifying (for example, phenol modification, aromatic modification, hydrogenation modification or hydrocarbon modification) the terpene-based resin above.

Examples of the hydrocarbon based tackifying resin include various hydrocarbon based resins such as aliphatic hydrocarbon resins (for example, polymers of an aliphatic hydrocarbon, e.g., olefins or dienes having from 4 to 5 carbon atoms (for example, olefins such as butene-1, isobutylene and pentene-1; dienes such as butadiene, 1,3-pentadiene and isoprene; etc.), etc.), aromatic hydrocarbon resins (for example, polymers of a vinyl group-containing aromatic hydrocarbon having from 8 to 10 carbon atoms (for example, styrene, vinyltoluene, α-methylstyrene, indene, methylindene, etc.), etc.), aliphatic cyclic hydrocarbon resins (for example, alicyclic hydrocarbon resins obtained by cyclizing and dimerizing a so-called "C4 petroleum fraction" or "C5 petroleum fraction" and subsequently polymerizing the product, polymers of a cyclic diene compound (for example, cyclopentadiene, dicyclopentadiene, ethylidene norbornene, dipentene, etc.) or hydrogenation products thereof, alicyclic hydrocarbon resins obtained by hydrogenating an aromatic ring of the following aromatic hydrocarbon resin or aliphatic and aromatic petroleum resin, etc.), aliphatic and aromatic petroleum resins (for example, styrene-olefin copolymers, etc.), aliphatic and alicyclic petroleum resins, hydrogenated hydrocarbon resins, coumarone based resins and coumarone-indene based resins.

For the purpose of not only reducing the diffusion amount of each of formaldehyde and toluene in the double-sided pressure-sensitive adhesive tape but exhibiting high adhesion, peel-preventing properties and heat resistance in the double-sided pressure-sensitive adhesive tape, a tackifying resin having a softening point (softening temperature) of 120 °C or higher (preferably 130 °C or higher, and more preferably 140 °C or higher) is suitable. Incidentally, an upper limit of the softening point of the tackifying resin is not particularly limited, and it can be, for example, set up to 170 °C or less (preferably 160 °C or less, and more preferably 155 °C or less).

Incidentally, the softening point of the tackifying resin is defined as a value measured by the ring and ball method specified in JIS K 5902 (2006). Specifically, a sample is promptly melted at a temperature as low as possible, and the resulting melt is filled in a ring placed on a flat metal plate with care so as not to form bubbles. After cooling, a portion protruded from the plane including a top edge of the ring is cut off with a knife heated a little. Subsequently, a support is placed in a glass vessel (diameter: 85 mm or more, height: 127 mm or more), and water cooled after being previously boiled is poured into the vessel to a depth of 90 mm or more. Subsequently, a steel ball (diameter: 9.5 mm, weight: 3.5 g) and the ring filled with the sample are immersed in water in such a manner that they do not come into contact with each other, and the temperature of water is kept at 20 °C ± 5 °C for 15 minutes. Subsequently, the steel ball is placed in the center of the surface of the sample in the ring, followed by placing this at a fixed position on the support. Subsequently, a distance from the top edge of the ring to the water surface is kept at 50 mm; a thermometer is placed; the position of the center of a mercury ball of the thermometer is kept at the same height of the center of the ring; and the vessel is heated. A flame of a Bunsen burner to be used for heating is regulated in such a manner that the flame touches a middle part between the center and the edge of the bottom of the vessel, thereby heating uniformly. Incidentally, an elevation rate of the water temperature after the temperature has reached 40 °C from a beginning of heating must be 5.0 ± 0.5 °C per minute. A temperature is read at the time when the sample is gradually softened, runs off the ring and finally comes into contact with a bottom plate, and this temperature is defined as a softening point. The measurement of the softening point is carried out using two or more sets simultaneously, and an average value thereof is adopted.

In particular, as the tackifying resin, a tackifying resin in which formaldehyde is not used as a material (or a raw material) at the production of the tackifying resin can be suitably used. In the tackifying resin, examples of the tackifying resin in which formaldehyde is not used as a material or a raw material include rosin based tackifying resins, terpene based tackifying resins, hydrocarbon based tackifying resins, epoxy based tackifying resins, polyamide based tackifying resins and elastomer based tackifying resins. In this way, by using a tackifying resin in which formaldehyde is not used as a material (or a raw material) as the tackifying resin, a diffusion amount (content) of formaldehyde in the double-sided pressure-sensitive adhesive tape having a tackifying resin-containing pressure-sensitive adhesive layer can be controlled to 3 µg/m³ or less. Also, it is possible to contrive to reduce the TVOC amount.

Though a method of adding the tackifying resin to the pressure-sensitive adhesive layer is not particularly limited, examples thereof include a method of adding to a pressure-sensitive adhesive composition as described later. More specifically, in the case where the pressure-sensitive adhesive composition as described later is an emulsion type pressure-sensitive adhesive composition, there is exemplified a method of adding a tackifying resin-containing emulsion obtained by dispersing a tackifying resin in water. Incidentally, the pressure-sensitive adhesive composition means a composition for forming the pressure-sensitive adhesive layer.

The tackifying resin-containing emulsion can be prepared by dispersing a tackifying resin in water. On that occasion, the tackifying resin-containing emulsion is usually prepared by dissolving or melting the tackifying resin and then dispersing it in water. In the case where the tackifying resin is a tackifying resin having a low softening point, the tackifying resin-containing emulsion can be prepared by melting the tackifying resin upon heating and then dispersing it in water. On the other hand, in the case where the tackifying resin is a tackifying resin having a high softening point, it is preferable to prepare the tackifying resin-containing emulsion by dissolving or melting the tackifying resin utilizing a method of dissolving or melting the tackifying resin, such as a method of melting the tackifying resin under high temperature and high pressure by not substantially using an organic solvent at all, and a method of dissolving the tackifying resin using a material other than aromatic hydrocarbon based organic solvents, and then dispersing the resulting resin in water. In this way, by utilizing the method of dissolving or melting the tackifying resin as described above at the dissolution or melting of the tackifying resin, a diffusion amount (content) of formaldehyde and a diffusion amount (content) of toluene in the double-sided pressure-sensitive adhesive tape can be finally controlled to 3 µg/m³ or less and 10 µg/g or less, respectively. Also, it is possible to contrive to reduce the TVOC amount.

Incidentally, as a method of emulsifying the tackifying resin by not substantially using an organic solvent at all, there are exemplified a non-solvent system high-pressure emulsification method, a non-solvent system phase conversion emulsification method and the like. The non-solvent system high-pressure emulsification method as referred to herein is a method in which a tackifying resin is heated to its softening point or higher and preliminarily mixed in a melted state with water and an appropriate emulsifier, and the mixture is then emulsified in a high-pressure emulsifying machine, thereby achieving emulsification. Also, the non-solvent system phase conversion emulsification method as referred to herein is a method in which a tackifying resin is heated to its softening point or higher to knead an emulsifier therein under an elevated pressure or under normal pressure, and hot water is gradually added thereto to effect phase conversion, thereby achieving emulsification.

Also, in the method of dissolving or melting the tackifying resin using a material other than aromatic hydrocarbon based organic solvents, the material other than aromatic hydrocarbon based organic solvents can be properly chosen depending upon the kind of the tackifying resin, and alicyclic hydrocarbon based organic solvents can be suitably used. Examples of such an alicyclic hydrocarbon based organic solvent include cyclohexanes (for example, cyclohexane, alkyl group-containing cyclohexanes such as methylcyclohexane, ethylcyclohexane, dimethylcyclohexane and methylethylcyclohexane, etc.); and in addition to the above, cyclopentanes (for example, cyclopentane, alkyl group-containing cyclopentanes, etc.), cycloheptanes (for example, cycloheptane, alkyl group-containing cycloheptanes, etc.) and cyclooctanes (for example, cyclooctane, alkyl group-containing cyclooctanes, etc.) each corresponding to the foregoing cyclohexanes. Incidentally, such an organic solvent as alicyclic hydrocarbon based organic solvents can be used solely or in admixture of two or more kinds thereof.

Incidentally, though a used amount of the organic solvent such as alicyclic hydrocarbon based organic solvents is not particularly limited, it may be a used amount in which it is able to dissolve or melt the tackifying resin and if desired, disperse it in water using an emulsifier. But, it is preferable to reduce the amount to the minimum as far as possible. Incidentally, after the tackifying resin-containing emulsion is prepared, it is important to remove the organic solvent as far as possible by a known or conventional removal method (for example, a vacuum distillation method, etc.).

In the invention, in the preparation of the tackifying resin-containing emulsion, an emulsifier can be used at the time of dispersing the tackifying resin in water. As the emulsifier, one or two or more kinds of emulsifiers can be properly chosen and used among the above-exemplified emulsifiers.

Incidentally, the emulsifier which is used at the time of obtaining the acrylic polymer by means of emulsion polymerization and the emulsifier which is used at the preparation of the tackifying resin-containing emulsion may be the same as or different from each other. However, for example, when one of the emulsifiers is an anionic emulsifier, it is preferable to use an anionic emulsifier for the other, too. Also, when one of the emulsifiers is a nonionic emulsifier, it is preferable to use a nonionic emulsifier for the other, too.

A used amount of the emulsifier is not particularly limited so far as it is a used amount in which the tackifying resin can be prepared in a form of an emulsion. For example, the used amount of the emulsifier can be chosen from the range of from 0.2 to 10 % by weight (preferably from 0.5 to 5 % by weight) based on the total amount of the tackifying resin (solids content).

Incidentally, as the tackifying resin-containing emulsion, there can be, for example, used "SK-253NS" (trade name, manufactured by Harima Chemicals, Inc., softening point: 145 °C, which is a tackifying resin-containing emulsion produced by not substantially using an organic solvent at all), "TAMANOR E-200-NT" (trade name, manufactured by Arakawa Chemical Industries, Ltd., softening point: 150 °C, which is a tackifying resin-containing emulsion produced by not substantially using an alicyclic hydrocarbon based organic solvent), etc.

Also, the pressure-sensitive adhesive layer may contain, in addition to the foregoing components, known additives such as an anti-aging agent, a filler, a colorant (for example, a pigment, a dye, etc.), a UV absorber, an antioxidant, a plasticizer, a softening agent, a surfactant and an antistatic agent as the need arises, within the range where the characteristics of the invention are not impaired.

In the invention, from the viewpoint of design properties, the pressure-sensitive adhesive layer may be colored. The color for coloration varies depending on a speaker as the adherend and is not particularly limited. But, for example, a black color or a hue with a gray or dark gray tone is suitably used. In particular, from the viewpoint of making the surface of the pressure-sensitive adhesive layer (layer A) visible from an opening portion of a decorative sheet for speaker less perceivable, it is preferable that the pressure-sensitive adhesive is colored black.

Such coloration can be attained by adding a pigment (coloring pigment) to an extent that the effects of the invention are not impaired. Examples of a specific coloration method include a method of adding a pigment to a pressure-sensitive adhesive composition as described later. Incidentally, the pressure-sensitive adhesive composition means a composition for forming a pressure-sensitive adhesive layer.

As an example of a specific method of adding a pigment to a pressure-sensitive adhesive composition, for example, in the case where the pressure-sensitive adhesive layer is formed of an emulsion type pressure-sensitive adhesive composition as described later, there is exemplified a method in which the pressure-sensitive adhesive layer is formed of a mixture obtained by mixing an emulsion type pressure-sensitive adhesive composition and an aqueous dispersion of a colorant. The mixture of an emulsion type pressure-sensitive adhesive composition and an aqueous dispersion of a colorant may be obtained by adding the aqueous dispersion of the colorant to the emulsion type pressure-sensitive adhesive composition, followed by mixing, or may be obtained by adding the emulsion type adhesive composition to the aqueous dispersion of the colorant, followed by mixing. However, in general, the mixture of an emulsion type pressure-sensitive adhesive composition and an aqueous dispersion of a colorant is obtained by adding the aqueous dispersion of the colorant to the emulsion type pressure-sensitive adhesive composition, followed by mixing. Incidentally, a solid concentration of the emulsion type pressure-sensitive adhesive composition at the time of mixing can be, for example, chosen from the range of from about 45 to 80 % by weight, and preferably about 50 to 70 % by weight. The solid concentration of the emulsion type pressure-sensitive adhesive composition at the time of mixing may be chosen while taking into consideration a balance in viscosity with the aqueous dispersion of the colorant to be used, workability and the like.

For example, in the case of coloring the acrylic pressure-sensitive adhesive layer black, carbon black can be used. A used amount of the carbon black is not particularly limited. But, for example, in the case where the pressure-sensitive adhesive layer is an acrylic pressure-sensitive adhesive layer, from the viewpoint of coloration degree or the like, the used amount of the carbon black is preferably from 0.1 to 10 parts by weight, and more preferably from 0.5 to 4 parts by weight based on 100 parts by weight of the acrylic polymer.

In the double-sided pressure-sensitive adhesive tape of the invention, in view of matting properties (low glossiness) and design properties, a 60-dgree mirror surface glossiness on the surface of the layer A immediately after peeling off the separator is preferably less than 10%, more preferably less than 8 %, and still more preferably less than 6.5 %. Incidentally, there may be the case where the "60° mirror surface glossiness on the surface of the layer A immediately after peeling off the separator" is called an "initial glossiness". In the present invention, the glossiness is determined by a method specified in JIS Z 8741 (1997). Specifically, for example, a value measured using a digital variable gloss meter (manufactured by Suga Test Instruments Co., Ltd.) at an incident angle/light-receiving angle of 60° can be used.

In the double-sided pressure-sensitive adhesive tape of the invention, when the initial glossiness is less than 10 %, an excellent initial matting effect is revealed, and at the time of using the double-sided pressure-sensitive adhesive tape of the invention for an application of attaching and fixing a decorative sheet for speaker to a speaker portion of a housing, even though the surface of the layer A is seen from an opening portion of the decorative sheet, the design properties are not impaired. On the other hand, when the initial glossiness is 10 % or more, a glare of the tape surface is seen from an opening portion of the speaker sheet, so that there is a concern that a sense of high-grade feeling and design properties of a television set or the like are impaired. Incidentally, a lower limit of the initial glossiness is not particularly limited, and it may be 0 % or more. Incidentally, though a method of obtaining the layer A having the foregoing glassiness is not particularly limited, for example, there is preferably exemplified a method in which the layer A is formed on the separator having surface unevenness, and the unevenness is transferred onto the layer A, or the like.

The surface of the layer A is a surface on the side of the decorative sheet. From the standpoint of controlling the initial glossiness on a low level, it is preferable that the surface of the layer A is moderately roughed, and it is more preferable that the surface of the layer A has an uneven shape.

Namely, from the standpoint of obtaining a more satisfactory matting effect, it is preferable that the surface of the layer A of the double-sided pressure-sensitive adhesive tape of the invention is roughed.

In the double-sided pressure-sensitive adhesive tape of the invention, the surface of the layer A is not particularly limited. However, for example, it is preferable that the surface of the layer A is controlled so as to have an uneven shape by choosing a separator having unevenness on a surface thereof and transferring an uneven structure of the surface of separator onto the surface of the pressure-sensitive adhesive layer.

A surface roughness (arithmetic average roughness Ra) of the surface of the layer A is preferably from 0.1 to 15 µm, and more preferably from 2 to 4 µm. When the surface roughness of the surface of the layer A is less than 0.1 µm, irregular reflection is small on the surface of the layer A, so that there may be the case where a sufficient matting effect is not obtained. On the other hand, when the surface roughness exceeds 15 µm, the unevenness of the surface of layer A is too large, so that there may be the case where wetting against the adherend (decorative sheet) is not sufficiently obtained, and pressure-sensitive adhesive characteristics are lowered. Incidentally, the arithmetic average roughness Ra can be determined in conformity with JIS B 0601 (2001), and for example, it can be measured by a scanning confocal laser microscopy "LEXT OLS3000" (manufactured by Olympus Corporation).

Meanwhile, the surface of the layer B is not particularly limited. The surface of the layer B may be smooth, or may have an unevenness structure as in the surface of the layer A.

Each of the pressure-sensitive adhesive layers (i.e., the layer A and the layer B) is formed of a pressure-sensitive adhesive composition. The pressure-sensitive adhesive composition means a composition for forming the pressure-sensitive adhesive layer. The pressure-sensitive adhesive composition may be a composition containing a base polymer as an essential component, or may be a composition containing, as an essential component, a monomer mixture for forming a base polymer or a partially polymerized material thereof. Also, the pressure-sensitive adhesive composition may contain the foregoing additives, particles and solvent, and the like, if desired. Incidentally, the "monomer mixture" as referred to herein means a mixture composed of only monomer components for forming the base polymer, and the "partially polymerized material" as referred to herein means a composition in which one or two or more components of the constituent components of the monomer mixture are partially polymerized.

Incidentally, though each of the pressure-sensitive adhesive layers (i.e., the layer A and the layer B) is not particularly limited, for example, the pressure-sensitive adhesive layer is formed by coating the pressure-sensitive adhesive composition on the surface of an appropriate separator or substrate or the like to form a coating layer and then curing or drying the formed coating layer, if desired.

The pressure-sensitive adhesive composition is not particularly limited and may have any form. Examples thereof include an emulsion type pressure-sensitive adhesive composition (water dispersion type pressure-sensitive adhesive composition), a solvent type pressure-sensitive adhesive composition, a heat fusion type pressure-sensitive adhesive composition (hot-melt type pressure-sensitive adhesive composition) and an active energy ray-curing type pressure-sensitive adhesive composition (ultraviolet ray-curing type pressure-sensitive adhesive composition).

In the double-sided pressure-sensitive adhesive tape of the invention, each of the TVOC amount, the diffusion amount of formaldehyde and the diffusion amount of toluene is adjusted so as to have a prescribed value, and it is important to use a pressure-sensitive adhesive composition having a small content (or residual amount) of each of formaldehyde and toluene for the pressure-sensitive adhesive composition constituting each of the layer A and the layer B. For that reason, in the double-sided pressure-sensitive adhesive tape of the invention, an emulsion type pressure-sensitive adhesive composition, a solvent type pressure-sensitive adhesive composition or an active energy ray-curing type pressure-sensitive adhesive composition is preferable, and a solvent type pressure-sensitive adhesive composition or an emulsion type pressure-sensitive adhesive composition is more preferable.

The emulsion type pressure-sensitive adhesive composition may be prepared by using a polymer in an emulsion form prepared utilizing an emulsion polymerization method as it is, or may be prepared by dispersing a base polymer prepared utilizing a polymerization method other than an emulsion polymerization method in water. In the case of preparing the emulsion type pressure-sensitive adhesive composition by dispersing a base polymer prepared utilizing a polymerization method other than en emulsion polymerization method in water, for example, when the base polymer is an acrylic polymer, the foregoing emulsifier can be used. Also, it is important that toluene is not used.

The solvent type pressure-sensitive adhesive composition may be prepared by using a polymer solution prepared utilizing a solution polymerization method as it is, or may be prepared by dissolving a base polymer prepared utilizing a polymerization method other than a solution polymerization method in a solvent. In the case of preparing the solvent type pressure-sensitive adhesive composition by dissolving a base polymer prepared utilizing a polymerization method other than a solution polymerization method in a solvent, the foregoing various generally used solvents can be used as the solvent. In particular, the solvent is the same as those in the case of using the foregoing generally used various kinds of solvent for the solution polymerization, and it is preferable that toluene is not used.

The active energy ray-curing type pressure-sensitive adhesive composition is prepared from a monomer mixture or a partially polymerized material thereof.

Though a thickness of the pressure-sensitive adhesive layer (thickness of each of the layer A and the layer B) in the double-sided pressure-sensitive adhesive tape of the invention is not particularly limited, it is preferably from 30 to 100 µm, and more preferably from 50 to 80 µm. When the thickness of the pressure-sensitive adhesive layer is less than 30 µm, there may be the case where an adhesive performance is lowered, whereas when it exceeds 100 µm, there may be the case where processability is lowered. Also, the pressure-sensitive adhesive layer may have any of a single-layered form or a multilayered form. Incidentally, in the case of attaching the separator onto the surface of the layer A and then pressing the layer A via the separator to control an uneven structure of the layer A, the thickness of the layer A refers to a thickness of the layer A before controlling the uneven structure. Also, in the case where a pressure-sensitive adhesive is coated on the uneven surface of the separator having an uneven structure and dried (if desired, further cured) to provide a pressure-sensitive adhesive layer, and thereafter, the uneven structure of the layer A is controlled by a method of transferring the pressure-sensitive adhesive layer, the thickness of the layer A refers to a thickness of the layer A formed on the separator.

### (Separator)

In the double-sided pressure-sensitive adhesive tape for fixing a decorative sheet for speaker of the invention, from the viewpoint of protecting the pressure-sensitive adhesive surface or preventing blocking until the time of use, it is preferable that a separator (release liner) is disposed on the surface (pressure-sensitive adhesive surface) at least on the side of the layer A. Also, a separator may also be disposed on the surface on the side of the layer B.

In the case where a separator is disposed on the surface on the side of the layer A, this separator is not particularly limited, and for example, known or conventional separators can be used.

Above all, in view of the fact that a satisfactory matting effect or satisfactory design properties are obtainable, it is preferable that the separator which is disposed on the surface of the layer A is a separator having unevenness on a surface thereof. The surface of the layer A is a surface on the side to be attached to the decorative sheet for speaker, and from the viewpoint of obtaining more satisfactory matting properties (low glossiness), it is preferable that the surface of the layer A has an uneven shape. So far as the separator has unevenness on a surface thereof, it is possible to impart an uneven shape onto the surface of the layer A by transferring the uneven structure.

In the separator having unevenness on a surface thereof, the surface on the side having unevenness is used as a release surface on the side of the layer A. According to this, the unevenness of the surface of the separator is transferred onto the surface of the pressure-sensitive adhesive layer, and the surface of the pressure-sensitive adhesive layer is moderately roughed, whereby the surface glossiness is lowered to obtain a matting effect.

Examples of the separator which is used in the double-sided pressure-sensitive adhesive tape of the invention include known or conventional separators and those prepared by applying an uneven structure to a surface of a known or conventional separator. Incidentally, a method of applying an uneven structure to a surface of a known or conventional separator is not particularly limited, and for example, embossing is exemplified.

Specifically, examples of such a known or conventional separator which can be used include low adhesive substrates composed of a fluorine based polymer (for example, polytetrafluoroethylene, polychlorotrifluoroethylene, polyvinyl fluoride, polyvinylidene fluoride, a tetrafluoroethylene-hexafluoropropylene copolymer, a chlorofluoroethylene-vinylidene fluoride copolymer, etc.); and low adhesive substrates composed of a non-polar polymer (for example, olefin based resins such as polyethylene and polypropylene, etc), in addition to separators having a layer having been subjected to a release treatment with a release treating agent on at least one surface of a separator substrate.

As the separator, for example, a separator having a release-treated layer on at least one surface of a substrate for separator can be suitably used. Examples of such a substrate for separator include plastic based substrate films (synthetic resin films) such as polyester films (for example, a polyethylene terephthalate film, etc.), olefin based resin films (for example, a polyethylene film, a polypropylene film, etc.), polyvinyl chloride films, polyimide films, polyamide films (nylon films) and rayon films; and papers (for example, high-quality papers, Japanese papers, Kraft papers, glassine papers, synthetic papers, topcoat papers, etc.); and in addition to the above, multilayered substrates obtained by laminating or co-extruding such a film or paper (for example, composites of two or three layers). The release treating agent constituting the release-treated layer is not particularly limited, and for example, a silicone based release treating agent, a fluorine based release treating agent, a long-chain alkyl based release-treating agent and the like can be used. Such a release treating agent can be used solely or in combination of two or more kinds thereof.

In the invention, in the case where the surface of the layer A is controlled so as to have an uneven shape by transfer of the uneven structure of the surface of the separator onto the surface of the pressure-sensitive adhesive layer, or other means, the separator having unevenness on a surface thereof is used for an application for protecting the layer A as it is.

The separator may be disposed on the both surfaces of the pressure-sensitive adhesive layer. Alternatively, after disposing a separator having a back release layer on one pressure-sensitive adhesive surface, the sheet may be wound to bring the back release layer of the separator into contact with the pressure-sensitive adhesive surface on the opposite side.

### (Double-sided pressure-sensitive adhesive tape for fixing decorative sheet for speaker)

The double-sided pressure-sensitive adhesive tape for fixing a decorative sheet for speaker of the invention can be produced by forming the pressure-sensitive adhesive layer (each of the later A and the layer B) on each side of the substrate.

A method of forming the pressure-sensitive adhesive layer (each of the layer A and the layer B) on each side of the substrate is not particularly limited, and examples thereof include a method in which a pressure-sensitive adhesive composition is coated on a surface of a substrate and dried (if desired, further cured) (direct method); and a method in which a pressure-sensitive adhesive composition is coated on a surface of an appropriate separator and dried (if desired, further cured) to form a pressure-sensitive adhesive layer, and thereafter, the pressure-sensitive adhesive layer is transferred onto a substrate (transfer method).

In the case of obtaining the pressure-sensitive adhesive layer (each of the layer A and the layer B) by the foregoing direct method or transfer method, from the viewpoint of more reducing the TVOC amount and the diffusion amount of each of toluene and formaldehyde, it is preferable to provide a drying step after the pressure-sensitive adhesive composition is coated (applied) on the substrate or separator and then dried and/or cured. Though a drying condition in the drying step is not particularly limited, from the viewpoint of more reducing the diffusion amount of each of toluene and formaldehyde, it is preferable to carry out drying usually at from 80 to 130 °C for from 1 to 5 minutes.

In particular, the forming method of the layer A is preferably a transfer method. Above all, a transfer method using, as the separator, a separator having unevenness on a surface thereof is preferable. This is because the separator can be simultaneously disposed on the layer A.

For example, by coating an acrylic pressure-sensitive adhesive on a separator having unevenness on a surface thereof and drying it (if desired, further drying) to form a pressure-sensitive adhesive layer, the unevenness on the surface of the separator is transferred onto the surface of the pressure-sensitive adhesive layer, and by transferring the pressure-sensitive adhesive layer onto a substrate, unevenness is formed on the surface of the layer A. Therefore, the matting effect (low glossiness) can be effectively obtained, and at the same time, the separator can be disposed on the layer A.

Incidentally, at the coating of the acrylic pressure-sensitive adhesive composition, a conventionally employed coater (for example, a gravure roll coater, a reverse roll coater, a kiss roll coater, a dip roll coater, a bar coater, a knife coater, a spray coater, etc.) can be used.

In the double-sided pressure-sensitive adhesive tape for fixing a decorative sheet for speaker of the invention, the TVOC amount and the diffusion amount of each of formaldehyde and toluene are extremely small. For that reason, by using the double-sided pressure-sensitive adhesive tape for fixing a decorative sheet for speaker of the invention, not only it is possible to exhibit excellent adhesion to a housing as well as a decorative sheet for speaker, but it is possible to contrive to enhance the environmental hygiene. Also, indoor air pollution can be prevented, so that it is also effective from the standpoint of responding to sick house syndrome.

The double-sided pressure-sensitive adhesive tape for fixing a decorative sheet for speaker of the invention is used for an application for attaching and fixing a decorative sheet for speaker to a speaker portion of a housing (main body).

Examples of the decorative sheet for speaker include a net composed of a polycarbonate (PC) or the like and a gauze produced by roughly knitting fibers of a polyester. Also, examples of the housing include a housing (main body portion) of a television set, and in many cases, for example, the housing is composed of polystyrene, PC/ABS (polycarbonate/ABS resin) or the like.

By controlling the surface glossiness by means of, for example, using a separator having unevenness on a surface thereof, the double-sided pressure-sensitive adhesive tape of the invention is able to enhance environmental hygiene and prevent indoor air pollution, exhibits excellent adhesion to a decorative sheet for speaker and a housing and is able to enhance matting properties and design properties of the surface on the side of the decorative sheet for speaker. Moreover, with respect to the satisfactory matting properties and design properties, stability with time can also be obtained.

In the case of attaching and fixing a decorative sheet for speaker to a housing using the double-sided pressure-sensitive adhesive tape for fixing a decorative sheet for speaker of the invention, though there are no particular limitations, it is preferable to attach and fix the decorative sheet for speaker to the housing while attaching the side of the layer A to the decorative sheet for speaker and attaching the side of the layer B to the housing.

### Examples

The present invention is described in greater detail below by referring to Examples, but the present invention is not limited to these Examples.

### (Example 1)

In a reaction vessel equipped with a stirrer, a thermometer, a reflux condenser, a dropping device and a nitrogen-introducing tube, 35 parts by weight of ion-exchanged water was added, followed by stirring at 60 °C for one hour or more while introducing a nitrogen gas thereinto. To this, 0.1 parts by weight of 2,2'-azobis[N-(2-carboxyethyl)-2-methylpropionamidine] n-hydrate ("VA-0571", trade name, manufactured by Wako Pure Chemical Industries, Ltd.) was added as a polymerization initiator to obtain a reaction liquid.

Also, 90 parts by weight of n-butyl acrylate (BA), 10 parts by weight of 2-ethylhexyl acrylate (2-EHA) and 4 parts by weight of acrylic acid (AA) as monomer raw materials, 2 parts by weight of polyoxyethylene lauryl ether sodium sulfate as an emulsifier, and 0.05 parts by weight of dodecanethiol as a chain transfer agent were added to 40 parts by weight of ion-exchanged water, and the mixture was emulsified to obtain a monomer raw material emulsified liquid.

To the foregoing reaction liquid kept at 60 °C, the foregoing monomer raw material emulsified liquid was gradually added dropwise over 4 hours, thereby achieving emulsion polymerization. Thereafter, to 100 parts by weight of the monomer raw materials, 0.1 parts by weight of ascorbic acid and 0.1 parts by weight of a 35 % aqueous hydrogen peroxide solution as additional polymerization initiators were added, thereby achieving a redox treatment. Then, after the reaction mixture was cooled to room temperature, a 10 % aqueous ammonia solution was added to adjust a pH to 7, thereby obtaining an acrylic polymer emulsion.

To the foregoing acrylic polymer emulsion, an emulsion of a tackifier ("SK-253NS", trade name, manufactured by Harima Chemicals, Inc., which is an aqueous emulsion of a polymerized rosin based resin having a softening point of 145 °C and which is produced by not substantially using an organic solvent at all) was added in an amount of 30 parts by weight in terms of a solid content based on 100 parts by weight of the acrylic polymer contained in the emulsion, thereby obtaining a water dispersion type pressure-sensitive adhesive composition.

Furthermore, to the foregoing water dispersion type pressure-sensitive adhesive composition, an aqueous black pigment ("Aqua-Black 162", trade name, manufactured by Tokai Carbon Co., Ltd.) was added in an amount of 1 part by weight based on 100 parts by weight of the acrylic polymer, thereby obtaining a black water dispersion type pressure-sensitive adhesive composition.

The foregoing black water dispersion type pressure-sensitive adhesive composition was coated in a thickness after drying of 70 µm on a surface of a release liner having unevenness without regularity, which has a surface having an arithmetic average roughness Ra of 2.8 µm, followed by drying at 100 °C for 2 minutes, thereby obtaining Sheet 1 constituted of a release liner having unevenness on a surface thereof and a pressure-sensitive adhesive layer (layer A which is a pressure-sensitive adhesive layer on the decorative sheet side).

The black water dispersion type pressure-sensitive adhesive composition was coated in a thickness after drying of 70 µm on a release layer of a release liner ("75EPS (M) Cream (modified)", trade name, manufactured by Oji Paper Co., Ltd.), followed by drying at 100 °C for 2 minutes, thereby obtaining Sheet 2 constituted of a release liner and a pressure-sensitive adhesive layer (layer B which is a pressure-sensitive adhesive layer on the housing-fixing side).

Sheet 1 and Sheet 2 were attached to a nonwoven fabric substrate ("SP Base Paper-14", trade name, manufactured by Daifuku Paper Mfg. Co., Ltd., which is a pulp based nonwoven fabric having a basis weight of 14 g/m ² a thickness of 42 µm and a bulk density of 0.33 g/m²), thereby obtaining a double-sided pressure-sensitive adhesive tape (having a constitution of release liner having unevenness on a surface thereof/pressure-sensitive adhesive layer (layer A which is a pressure-sensitive adhesive layer on the decorative sheet side)/nonwoven fabric substrate/pressure-sensitive adhesive layer (layer B which is a pressure-sensitive adhesive layer on the housing-fixing side)/release liner).

### (Example 2)

In a reaction vessel equipped with a stirrer, a thermometer, a reflux condenser, a dropping device and a nitrogen-introducing tube, 70 parts by weight of n-butyl acrylate (BA), 27 parts by weight of 2-ethylhexyl acrylate (2-EHA), and 3 parts by weight of acrylic acid (AA) as monomer raw materials and 150 parts by weight of ethyl acetate as a solvent were added, and a nitrogen gas was introduced while gently stirring to purge the inside of the reaction vessel with nitrogen, thereby obtaining a reaction liquid.

This reaction liquid was heated at 70 °C, and 0.2 parts by weight of azobisisobutyronitrile (AIBN) as a polymerization initiator was added thereto. A polymerization reaction was carried out for 8 hours while keeping the system at 70 °C, thereby obtaining an ethyl acetate solution of an acrylic polymer. Subsequently, to this ethyl acetate solution of an acrylic polymer, 20 parts by weight of a tackifying resin ("RIKATAC PCJ", trade name, manufactured by Rika Fine Tech Co., Ltd., which is a polymerized rosin ester resin having a softening point of 128 °C), 2 parts by weight of a crosslinking agent ("CORONATE L", trade name, manufacture by Nippon Polyurethane Industry Co., Ltd., which is an isocyanate based crosslinking agent) and a carbon black dispersion resin in an amount of 2 parts by weight in terms of carbon black based on 100 parts by weight of the acrylic polymer were added and uniformly stirred and mixed, thereby obtaining a black non-toluene solvent type pressure-sensitive adhesive composition containing ethyl acetate as a solvent.

Subsequently, a double-sided pressure-sensitive adhesive tape (having a constitution of release liner having unevenness on a surface thereof/pressure-sensitive adhesive layer (layer A which is a pressure-sensitive adhesive layer on the decorative sheet side)/nonwoven fabric substrate/pressure-sensitive adhesive layer (layer B which is a pressure-sensitive adhesive layer on the housing-fixing side)/release liner) was obtained in the same manner as in Example 1, except for using the black non-toluene solvent type pressure-sensitive adhesive composition in place of the black water dispersion type pressure-sensitive adhesive composition.

### (Comparative Example 1)

In a reaction vessel equipped with a stirrer, a thermometer, a reflux condenser, a dropping device and a nitrogen-introducing tube, 100 parts by weight of n-butyl acrylate (BA), 3 parts by weight of acrylic acid (AA), 0.1 parts by weight of 2-hydroxyethyl acrylate and 5 parts by weight of vinyl acetate as monomer raw material monomer and 160 parts by weight of a mixed solvent of ethyl acetate and toluene (ethyl acetate: 30 parts by weight, toluene: 130 parts by weight) were added, and a nitrogen gas was introduced while gently stirring to purge the inside of the reaction vessel with nitrogen, thereby obtaining a reaction liquid.

This reaction liquid was heated at 70 °C, and 0.2 parts by weight of azobisisobutyronitrile (AIBN) as a polymerization initiator was added thereto. A polymerization reaction was carried out for 6 hours while keeping the system at 70 °C, and the reaction mixture was diluted with 40 parts by weight of ethyl acetate to obtain an acrylic polymer solution. Subsequently, to this acrylic polymer solution, 40 parts by weight of a tackifying resin ("SUMILITE RESIN PR12603", trade name, manufactured by Sumitomo Bakelite Co., Ltd., which is a terpene phenolic resin), 2 parts by weight of a crosslinking agent ("CORONATE L", trade name, manufacture by Nippon Polyurethane Industry Co., Ltd., which is an isocyanate based crosslinking agent) and a carbon black dispersion resin in an amount of 2 parts by weight in terms of carbon black based on 100 parts by weight of the acrylic polymer were added and uniformly stirred and mixed, thereby obtaining a black toluene solvent type pressure-sensitive adhesive composition.

Subsequently, a double-sided pressure-sensitive adhesive tape (having a constitution of release liner having unevenness on a surface thereof/pressure-sensitive adhesive layer (layer A which is a pressure-sensitive adhesive layer on the decorative sheet side)/nonwoven fabric substrate/pressure-sensitive adhesive layer (layer B which is a pressure-sensitive adhesive layer on the housing-fixing side)/release liner) was obtained in the same manner as in Example 1, except for using the black toluene solvent type pressure-sensitive adhesive composition in place of the black water dispersion type pressure-sensitive adhesive composition.

### (Evaluation)

The double-sided pressure-sensitive adhesive tapes obtained in the foregoing Examples and Comparative Example were measured with respect to a total volatile organic compound amount (TVOC amount), a diffusion amount of formaldehyde, a diffusion amount of toluene, a 60-degee mirror surface glossiness and an ordinary pressure-sensitive adhesive force. The results obtained are shown in Table 1.

### Total volatile organic compound amount (TVOC amount)

The double-sided pressure-sensitive adhesive tape was cut off into a prescribed size (1 cm × 5 cm, area: 5 cm²), an aluminum foil was then attached onto one surface thereof, with the other surface being made in an opened state, thereby preparing a sample attached to the aluminum foil. Incidentally, the surface to be made in an opened state may be any side of the double-sided pressure-sensitive adhesive tape and can be arbitrarily chosen.

This sample attached to the aluminum foil was added in a vial container (volume: 20 mL), which was then hermetically plugged. Thereafter, the vial container having the sample added therein was heated at 80 °C for 30 minutes by a head space auto sampler, and 1.0 mL of the gas in a heated state was injected into a gas chromatographic measuring apparatus (GC measuring apparatus) and measured.

The amount of total volatile organic compounds (TVOC) was converted into a toluene standard on the basis of a separately prepared calibration curve. More specifically, the amount of the total volatile organic compound amount (TVOC amount) per gram of the sample as converted into a toluene standard was calculated on the basis of the following calibration curve from peak areas of all components of the sample obtained by the GC measurement.

### (Preparation of calibration curve)

Toluene as a standard sample was diluted with acetone to obtain a mixed standard solution. 1.0 µL of this mixed standard solution was added in a vial container, heated at 150 °C for 30 minutes and then subjected to GC measurement in the same manner as in the sample. Then, a calibration curve was prepared from adjusted concentrations and peak areas of the standard material.

Incidentally, the weight of the sample is a weight of the whole of the double-sided pressure-sensitive adhesive tape including a substrate and a pressure-sensitive adhesive layer supported by the substrate but does not include the release liner.

### A measurement condition of the gas chromatography was as follows.

### (Measurement condition of gas chromatography)

- Column: DB-FFAP, 1.0 µm (0.535 mmφ × 30 m)
- Carrier gas: He, 5.0 mL/min
- Column head pressure: 23 kPa (at 40 °C)
- Injection inlet: Split (split ratio: 12:1, temperature: 250 °C)
- Column temperature: 40 °C (0 min) - <+10°C/min> - 250 °C (9 min) (It was meant that the temperature was increased from 40 °C to 250 °C at a temperature elevation rate of 10 °C/min and then kept at 250 °C for 9 minutes.)
- Detector: FID (temperature: 250 °C)

### Diffusion amount of formaldehyde

The diffusion amount of formaldehyde was measured by a method in conformity with JIS A 1901 (2003).

The double-sided pressure-sensitive adhesive tape was cut off into a prescribed size (area: 0.043 m²), an aluminum foil was then attached onto one surface thereof, with the other surface being made in an opened state, thereby preparing a sample attached to the aluminum foil. Incidentally, the surface to be made in an opened state may be any side of the double-sided pressure-sensitive adhesive tape and can be arbitrarily chosen.

This sample attached to the aluminum foil was placed in a central part within a small-sized chamber under a condition of fixed temperature, relative humidity and amount of ventilation, and air was circulated thereinto.

### (Condition of small-sized chamber)

Temperature: 28.0 ± 0.5 °C
Relative humidity: (50 ± 5) %
Number of ventilation: 0.5 times ± 10%/hr

After a lapse of one day (24 hours) from start of the test, a concentration in the small-sized chamber was determined from air collected at an outlet of the small-sized chamber (a concentration of formaldehyde measured at the outlet of the small-sized chamber, which was a value obtained by dividing a total amount of formaldehyde collected in an exhaust port of the small-sized chamber by a collecting amount of air at the time of collecting air), from which was then calculated and quantified a concentration of formaldehyde (µg/m³) within the small-sized chamber after a lapse of one day (24 hours) from start of the test.

The concentration of formaldehyde within the small-sized chamber after a lapse of one day (24 hours) after start of this test was defined as the diffusion amount of formaldehyde.

A specific condition was as follows.

### (Sampling condition)

- Sampling tube: "GL-PAK mini AERO DNPH cartridge"'', manufactured by GL Sciences, Inc.
- Flow rate: 167 mL/min
- Collecting amount: 10 L

### (Measurement instruments, etc.)

- Small-sized chamber: "20L Chamber", manufactured by ADTEC Corporation
- Clean air supplying apparatus: "ADclean", manufactured by Shinryo Eco Business Co., Ltd.
- Sealing material and sealing box: None
- Temperature and humidity control apparatus: "ADPAC-SYSTEM III temperature and humidity unit", manufactured by ADTEC Corporation
- Air sampling apparatus: "SP208-1000DUAL sampling pump", manufactured by GL Sciences, Inc.

### (Analysis condition)

- High-performance liquid chromatograph: "TM996PAD", manufactured by Waters Corporation
- Detector: UV Detector
- Column: "Puresil C18 (4.6 x 150 mm)", manufactured by Waters corporation
- Mobile phase: Acetonitrile aqueous solution (acetonitrile/water = 50/50)
- Injection amount: 20 µL
- Detection wavelength: 360 nm

### Diffusion amount of toluene

The double-sided pressure-sensitive adhesive tape was cut off into a prescribed size (1 cm × 5 cm, area: 5 cm²), an aluminum foil was then attached onto one surface thereof, with the other surface being made in an opened state, thereby preparing a sample attached to the aluminum foil. Incidentally, the surface to be made in an opened state may be any side of the double-sided pressure-sensitive adhesive tape and can be arbitrarily chosen.

This sample attached to the aluminum foil was added in a vial container (volume: 20 mL), which was then hermetically plugged. Thereafter, the vial container having the sample added therein was heated at 80 °C for 30 minutes by a head space auto sampler, and 1.0 mL of the gas in a heated state was injected into a gas chromatographic measuring apparatus (GC measuring apparatus), and an amount of toluene was measured. More specifically, the amount of toluene was determined on the basis of a calibration curve prepared from a peak area assigned to toluene of the sample, which was obtained by the GC measurement, according to the following method, and a content (µg/g) of toluene per gram of the sample (double-sided pressure-sensitive adhesive tape) was calculated. This content of toluene was defined as the diffusion amount of toluene.

### (Preparation of calibration curve)

Toluene as a standard sample was diluted with acetone to obtain a mixed standard solution. 1.0 µL of this mixed standard solution was added in a vial container, heated at 150 °C for 30 minutes and then subjected to GC measurement in the same manner as in the sample. Then, a calibration curve was prepared from adjusted concentrations and peak areas of the standard material.

A measurement condition of the gas chromatography was as follows.

### (Measurement condition of gas chromatography)

- Column: DB-FFAP, 1.0 µm (0.535 mmφ × 30 m)
- Carrier gas: He, 5.0 mL/min
- Column head pressure: 23 kPa (at 40 °C)
- Injection inlet: Split (split ratio: 12:1, temperature: 250 °C)
- Column temperature: 40 °C (0 min) - <+10°C/min> - 250 °C (9 min) (It was meant that the temperature was increased from 40 °C to 250 °C at a temperature elevation rate of 10 °C/min and then kept at 250 °C for 9 minutes.)
- Detector: FID (temperature: 250 °C)

### Ordinary pressure-sensitive adhesive force (N/20 mm)

A strip-shaped sheet piece having a width of 20 mm and a length of 100 mm was cut off from the double-sided pressure-sensitive adhesive tape, and after the release liner was peeled away, a PET film having a thickness of 25 µm was attached (backed) to an exposed pressure-sensitive adhesive surface thereof, thereby preparing a sample for measurement of pressure-sensitive adhesive force.

A 180° peel test was carried out using the sample for measurement of adhesive force. The sample for measurement and an adherend (stainless steel plate) were attached to each other in an ordinary state (at 23 °C and 50 % RH), and after a lapse of 30 minutes, the side of the sample for measurement (double-sided pressure-sensitive adhesive tape) was peeled away using a tensile tester, thereby measuring a load. A measured value was defined as the ordinary pressure-sensitive adhesive force.

The measurement was carried out in an atmosphere at 23 °C and 50 % RH under a condition of a peel angle of 180° and a tensile speed of 300 mm/min.

### Glossiness (initial glossiness)

According to a method specified in JIS Z 8741 (1997), the separator of the double-sided pressure-sensitive adhesive tape was peeled away, and a 60° mirror surface glossiness of an exposed surface of the pressure-sensitive adhesive layer (surface of the layer A, which was a surface of the pressure-sensitive adhesive layer on the decorative sheet side) was measured. The measurement was carried out at an incident angle/light-receiving angle of 60° by using a gloss meter (a handy gloss meter "HG-268", manufactured by Suga Test Instruments Co., Ltd.).

Incidentally, the double-sided pressure-sensitive adhesive tape immediately after peeling away the separator was used as a sample for measurement.

**Table 1**

| | TVOC amount [µg/g] | Diffusion mount of formaldehyde [µg/m³] | Diffusion amount of toluene [µg/g] | 60° mirror surface glossiness [%] | Ordinary adhesive force [N/20 mm] | |
|---|---|---|---|---|---|---|
| | | | | | Decorative sheet side | Housing-fixing side |
| Example 1 | 200 | <2 | 3 | 6.3 | 12.0 | 13.5 |
| Example 2 | 250 | <2 | 2 | 6.0 | 13.0 | 15.3 |
| Comparative Example 1 | 1230 | <2 | 1000 | 5.9 | 12.7 | 14.1 |

While the present invention has been described in detail and with reference to specific embodiments thereof, it will be apparent to one skilled in the art that various changes and modifications can be made therein without departing from the scope thereof.
This application is based on Japanese patent application No. 2010-158443 filed on July 13, 2010, the entire contents thereof being hereby incorporated by reference.

Further, all references cited herein are incorporated in their entireties.

## Claims

1. A double-sided pressure-sensitive adhesive tape for fixing a decorative sheet for speaker, comprising a substrate, a pressure-sensitive adhesive layer A disposed on one side of the substrate and a pressure-sensitive adhesive layer B disposed on the other side of the substrate,
wherein a total volatile organic compound amount (TVOC amount) is 300 µg/g or less, a diffusion amount of formaldehyde is 3 µg/m³ or less, and a diffusion amount of toluene is 10 µg/g or less.

2. The double-sided pressure-sensitive adhesive tape for fixing a decorative sheet for speaker according to claim 1, wherein a base polymer of the layer A is formed by solution polymerization using a solvent selected from a solvent composed of only ethyl acetate and a mixed solvent having a proportion of ethyl acetate of 90 % by weight or more.

3. The double-sided pressure-sensitive adhesive tape for fixing a decorative sheet for speaker according to claim 1, wherein the layer A is formed from a water dispersion type pressure-sensitive adhesive composition.

4. The double-sided pressure-sensitive adhesive tape for fixing a decorative sheet for speaker according to any one of claims 1 to 3, wherein in each of the layer A and the layer B, a content of a base polymer is 25 % by weight or more based on the total weight of the pressure-sensitive adhesive layer.

5. The double-sided pressure-sensitive adhesive tape for fixing a decorative sheet for speaker according to any one of claims 1 to 4, wherein a base polymer of the pressure-sensitive adhesive layer is an acrylic polymer.
